**Europäisches Patentamt**

**European Patent Office**

**Office européen des brevets**

(11) Veröffentlichungsnummer: **0 113 076**

**A1**

(12) # EUROPÄISCHE PATENTANMELDUNG

(21) Anmeldenummer: **83112255.1**

(51) Int. Cl.³: **G 02 B 5/172**

(22) Anmeldetag: **06.12.83**

(30) Priorität: **30.12.82 DE 3248640**

(43) Veröffentlichungstag der Anmeldung:
**11.07.84 Patentblatt 84/28**

(84) Benannte Vertragsstaaten:
**AT CH DE FR GB IT LI NL SE**

(71) Anmelder: **ANT Nachrichtentechnik GmbH**
**Gerberstrasse 33**
**D-7150 Backnang(DE)**

(72) Erfinder:
**Der Erfinder hat auf seine Nennung verzichtet**

(74) Vertreter: **Wiechmann, Manfred, Dipl.-Ing.**
**ANT Nachrichtentechnik GmbH Gerberstrasse 33**
**D-7150 Backnang(DE)**

(54) **Planarer Filmhybridring für die integrierte Optik.**

(57) Ein Hybridring (R) von n $\frac{6\lambda}{4}$ bzw. n $\frac{4\lambda}{4}$ Umfang, ist wie die Anschlußarme (A1, A2, A3, A4) als planare Filmwellenleiter realisiert.

FIG.1

EP 0 113 076 A1

- 1 -

K1 E7/Sch/sch
BK 82/167

## Integrierte Filmwellenleiter-Anordnung

In der optischen Nachrichtentechnik werden als Signalträger
optische Wellen benutzt.

Die wichtigsten Sender sind Halbleitersender und die wichtigsten Empfänger sind Fotodioden. Als Übertragungsmedium wird
bei grösseren Entfernungen eine Lichtleitfaser benutzt, die
als elektrischer Wellenleiter die Wellen führt. Für die von
der Sende- und Empfangsseite erforderlichen Komponenten zum
Aufbereiten der Nachrichtensignale sind breitbandige und dispersionsarme Komponenten erforderlich. Diese werden deshalb
meist als planare Filmwellenleiter aufgebaut, weil mit dieser
Bauweise die erforderlichen Wellenleiter und Komponenten leicht
in integrierter Technik herstellbar sind.

Aus der Mikrowellentechnik ist ferner eine Hybrid-Schaltung
benannt, hergestellt aus einem Hybridring mit 4 Anschlußarmen,
der so funktioniert, daß beim Einspeisen von Signalen in einem
Arm die Signalenergie auf zwei andere Arme aufgeteilt wird,
während der verbleibende vierte Arm vom Eingangsarm entkoppelt ist.

Vorliegende Erfindung hat sich die Aufgabe gestellt, eine Hybrid-Schaltung aufzuzeigen, die galvanisch entkoppelte Anschlußarme aufweist und in einfacher Weise auch bei höchsten Frequenzen herstellbar sind.

Erfindungsgemäß wird dies durch die im Hauptanspruch angegebenen Merkmale gelöst. Weitere Ausgestaltungen der Erfindung können gemäß den Merkmalen der Unteransprüche realisiert werden.

Anhand eines Ausführungsbeispiel soll im folgenden die Erfindung näher erläutert werden.

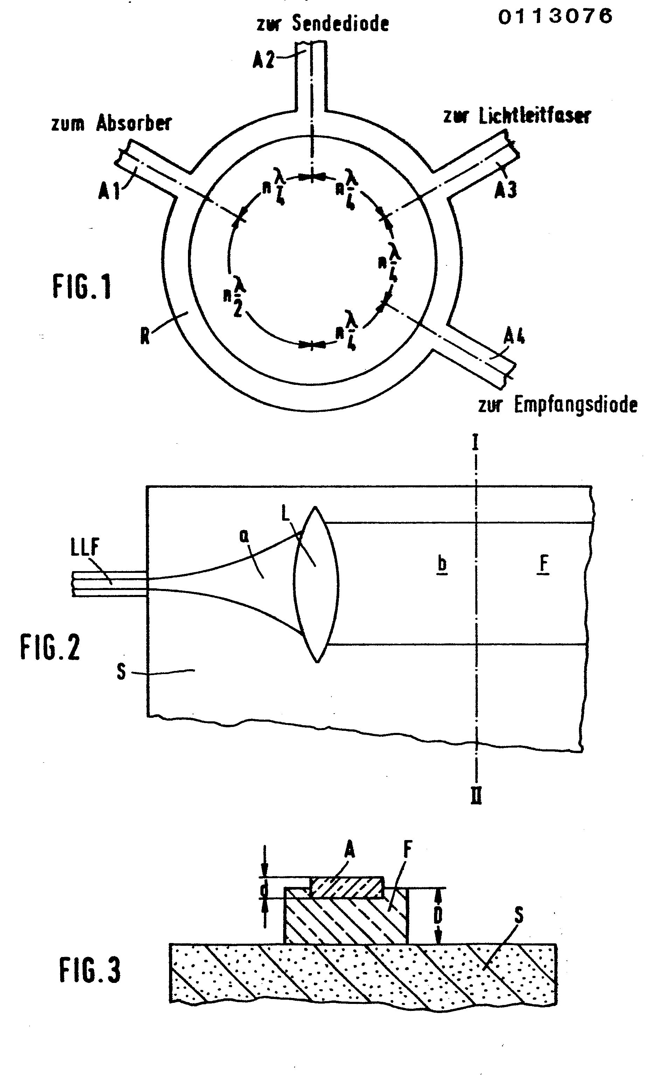

In der Fig. 1 ist in Draufsicht eine erfindungsgemäße Anordnung schematisch dargestellt. Sie besteht aus einem kreisförmigen Wellenleiter R. An ihm sind vier Anschlußarme A1, A2, A3 und A4 geschlossen. Der Durchmesser des kreisförmigen Wellenleiters R weist einen Umfang von $n \frac{6\lambda}{4}$ auf.

Der Abstand der Anschlußarme ist dabei so gewählt, daß die Arme A1, A2, A4 und A4 im Abstand von $n \frac{\lambda}{4}$ aufeinanderfolgen, so daß der Abstand zwischen dem vierten Arm A4 und dem ersten Arm $n \frac{2\lambda}{4}$ beträgt.

Die Wirkungsweise dieser Anordnung ist dergestellt, daß ein in den Anschlußarmen A2 eingespeistes Signal auf die beiden Anschlußarme A1 und A3 aufgeteilt wird und daß am Anschlußarm A4 keine Energie auftritt, so daß dieser Arm vom Eingangsarm A2 entkoppelt ist. Speist man beispielsweise ein Signal bei A4 ein, so ist A2 entkoppelt und A1 und A3 sind die Ausgangsarme.

Um die gewünschte galvanische Trennung der Anschlußarme zu erreichen, wird diese Hybrid-Schaltung durch optische Wellenleiter für den Ring R und die Anschlußarme A1 bis A4 realisiert. Damit die Anordnung auch noch bei hohen optischen Frequenzen einfach herstellbar ist, sind die gemeinsamen Wellenleiter als planare Filmwellenleiter ausgebildet. Dies erfolgt so, daß auf einem geeigneten Substrat S entsprechend der Fig. 3 ein Filmwellenleiter F aufgebracht ist. Durch geeignete Dimensionierung von F und S bezüglich der Abmessungen und der jeweiligen Brechzahlen erreicht man, daß eine optische Welle im wesentlichen im Filmwellenleiter F geführt wird. Meist wird bei derartigen Komponenten gefordert, daß man über ein großes frequenzbandgleiches Dispersionsverhalten erzielt. Dies läßt sich in einer weiteren Ausgestaltung der Erfindung dadurch erzielen, daß man den Filmwellenleiter F mit einer Auflage A versieht. Dieser kann völlig in den Film eingelegt sein oder nur auf diesem aufgebracht werden.
Beim Ausführungsbeispiel der Fig. 3 ist die Auflage etwa 50 % in den Filmwellenleiter eingelassen.

Wird über dem möglichst breiten Frequenzband konstantes und niedriges Dispersionsverhalten gefordert, so kann man dies dadurch erreichen, daß die Bedingungen

$$0,05 \; D < d < 1,00 \; D$$
$$n_S < n_F \quad n_A$$

eingehalten werden. Dabei bedeutet D die Dicke des Filmwellenleiters F, d die Dicke der Auflage A $n_S$ die Brechzahl des Substrats S, $n_F$ die Brechzahl des Filmwellenleiters F und $n_A$ die Brechzahl der Auflage A.

In der Fig. 2 ist dargestellt, wie man beispielsweise bei der Anordnung der Fig. 1 eine Lichtleitfaser LLF anschließen kann. Auf dem Substrat S als Träger der Anordnung ist ein Filmwellenleiter F aufgebracht, der den Anschlußarm A1 bildet. Die Lichtleitfaser LLF ist stumpf mit der Stirnseite des Filmwellenleiters F an der Stirnseite des Substrates S verbunden. Eine über diese Faser eingespeiste Welle, wird sich im Filmwellenleiter F so ausbreiten, wie dies durch die stark durchgezogenen Linien im Bereich a gezeigt ist. Um einen parallelen Strahlengang zu erhalten, wird der im Bereich a sich öffnende Strahlenkegel 5 durch eine Sammellinse L geführt, so daß danach die optische Welle im Bereich b des Filmwellenleiters einen parallelen Strahl bildet. Die Breite des Films kann man natürlich der erwähnten Apertur anpassen. Es ist jedoch ebenso möglich, die Breite des Films F größer zu wählen. Der Filmwellenleiter kann so ausgebildet werden, wie es anhand der Fig. 3 bereits gezeigt wurde. Diese zeigt einen Schnitt längs der Linie I, II der Anordnung in der Fig. 2.

Bei der Dimensionierung der erfindungsgemäßen Anordnung wird man natürlich bestrebt sein, die Anpassung der Anschlußarme A1 bis A4 an den ringförmigen Wellenleiter R möglichst breitbandig auszubilden. Vorzugsweise wird der Wellenwiderstand des Ringwellenleiters R um den Faktor $\sqrt{2}$ größer gewählt als der Wellenwiderstand eines Anschlußarmes. Dies kann leicht durch entsprechendes Tapern der Übergangszone erfolgen.

Bei bisherigen Hybrid-Schaltungen in Form von Hohlleitern war es nachteilig, daß für anzuschließende Dioden die einzelnen Anschlußarme galvanisch miteinander verbunden sind, so daß die Spannungszuführung mittels getrennter und isolierter Leitungen erfolgen mußte. Bei der erfindungsgemäßen Ausbildung entfällt dieser Nachteil, da keinerlei metallische Verbindung vorhanden ist. Wenn beispielsweise am Anschlußarm A1 ein Absorber, am Anschlußarm A2 eine Sendediode und am Anschlußarm A4 eine Empfangsdiode angeschlossen ist, so kann der Arm A3 mit einer gemeinsamen Sende- und Empfangsantenne verbunden werden. Durch die Wirkungsweise der Hybridanordnung sind für Sender und Empfänger keine getrennten Antennen erforderlich. Der Anschlußarm A3 kann bei diesen Ausführungen beispielsweise auch mit einer Lichtleitfaser verbunden werden, zur gleichzeitigen Weiterleitung von Sende- und Empfangssignalen, die sich in entgegengesetzter Richtung ausbreiten. Bei dieser Anordnung sind somit zwei Dioden vorhanden, die einer geeigneten Spannungszuführung bedürfen. Dies läßt sich in einfacher Weise dadurch realisieren, daß man auf der Oberfläche des Substrats bei der erfindungsgemäßen Anordnung zusätzlich zu den Dioden führende metallische Streifenleitungen aufbringt. Dies ist in bekannter Druckschaltungstechnik möglich, so daß man eine kompakte, ebene Anordnung erhält, wobei keinerlei gegenseitige Beeinflußung der Spannungszuführungen mit den im Hybrid vorhandenen Signalen möglich ist.

Je nach verwendeter Wellenlänge und geforderter Genauigkeit der Anordnung wird man den Faktor n bezüglich der Abstände der Anschlußarme gleich eins oder wesentlich größer wählen.

Die erfindungsgemäße Anordnung ermöglicht somit eine einfache Ausführung in integrierter Technik unter Vermeidung der eingangs genannten Nachteile.

- 1 -

ANT Nachrichtentechnik GmbH

Gerberstrasse 33

D-7150 Backnang

K1 E7/Sch/sch
BK 82/167

Patentansprüche

1. Planare Filmwellenleiter-Anordnung für die integrierte Optik, wobei die Anordnung aus einem Trägersubstrat bestimmter Brechzahl besteht, auf welchem ein im wesentlichen die Wellen führender Film mit einer größeren Brechzahl aufgebracht ist, dadurch gekennzeichnet, daß die Anordnung aus einem ringförmigen Filmwellenleiter (R) mit einem Umfang von $n \frac{6\lambda}{4}$ bzw. $\frac{4\lambda}{4}$ besteht, der vier ebenfalls als Filmwellenleiter ausgebildete Anschlußarme (A1, A2, A3, A4) aufweist, wobei diese Anschlußarme so angebracht sind, daß die Abstände der aufeinanderfolgenden ersten bis vierten Anschlußarme (A1, A2, A3, A4) jeweils $n \frac{\lambda}{4}$ beträgt, so daß der Abstand zwischen dem vierten und dem ersten Anschlußarm (A4, A1) $n \frac{\lambda}{2}$ bzw. $n \frac{\lambda}{4}$ beträgt, wenn

mit $\lambda$ die übertragene Wellenlänge

mit $n$ eine ganze positive Zahl

bezeichnet ist.

0113076

2. Anordnung nach Anspruch 1 mit dispersionsarmen Filmwellenleiter, dadurch gekennzeichnet, daß auf oder in den Filmwellenleitern eine relativ dünne optische wirksame Auflage (A) angebracht ist.

3. Anordnung nach einem der vorhergehenden Ansprüche, dadurch gekennzeichnet, daß mindestens ein Anschlußarm mit einer Lichtleitfaser (LLF) gekoppelt ist.

4. Anordnung nach Anspruch 3, dadurch gekennzeichnet, daß die Lichtleitfaser (LLF) unter Zwischenschaltung einer Linse (L) an den Filmwellenleiter (F) angekoppelt ist.

5. Anordnung nach einem der vorhergehenden Ansprüche, dadurch gekennzeichnet, daß auf dem Substrat (S) galvanische Verbindungen angebracht sind, vorzugsweise zur Spannungszuführung für Sende-, Empfangs- oder Mischdioden.

1/1
zur Sendediode

0113076

zum Absorber

zur Lichtleitfaser

A2

A1

A3

A4

zur Empfangsdiode

FIG.1

FIG.2

LLF

L

a

b

F

S

I

II

FIG.3

A

F

D

S

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | OPTICAL AND ELECTRO-OPTICAL INFORMATION PROCESSING SYMPOSIUM, 9/10 November 1964, Seiten 221-234, Boston, Mass., US D.B. ANDERSON: "Application of semiconductor technology to coherent optical transducers and spatial filters" * Seite 1, Zeile 12 - Seite 2, Zeile 7; Figur 6 * | 1 | G 02 B 5/172 |
| Y | --- IEEE TRANSACTIONS ON MICROWAVE THEORY AND TECHNIQUES, Band MTT-16, Nr. 6, Juni 1968, Seite 361, New York, US S. MARCH: "A wideband stripline hybrid ring" * Spalte 1, Zeilen 10-15,31-37; Figuren 1-2 * | 1,2 | |
| Y | --- IEEE TRANSACTIONS ON MICROWAVE THEORY AND TECHNIQUES, Band MTT-23, Nr. 1, Januar 1975, Seiten 170-175, New York, US Y. SUEMATSU et al.: "Quasi-guided modes and related radiation losses in optical dielectric waveguides with external higher index surroundings" * Seite 1, Spalte 1, Zeilen 1-18; Seite 5, Spalte 2, Zeilen 43-54 * --- -/- | 1,2 | RECHERCHIERTE SACHGEBIETE (Int. Cl. ³) <br><br> G 02 B 5/00 <br> H 01 P 5/00 |

Der vorliegende Recherchenbericht wurde für alle Patentansprüche erstellt.

| Recherchenort | Abschlußdatum der Recherche | Prüfer |
|---|---|---|
| DEN HAAG | 10-02-1984 | POPINEAU G.J.P. |

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | ELECTRONICS AND COMMUNICATIONS IN JAPAN, Band 54-A, Nr. 2, 1971, Seiten 47-52, New York, US Y. SHINADA et al.: "Larger sizes for rat-race circuits" * Zusammenfassung * | 1 | |
| | --- | | |
| A | ELECTRONICS AND COMMUNICATIONS IN JAPAN, Band 56-A, Nr. 11, 1973, Seiten 44-52, New York, US K. AZUMI et al.: "Generalization of rat-race circuits" * Zusammenfassung * | 1 | |
| | --- | | |
| A | ELECTRONICS AND COMMUNICATIONS IN JAPAN, Band 58-A, Nr. 2, 1975, Seiten 57-64, New York, US K. AZUMI et al.: "Generalization of simple-loop hybrid ring" * Zusammenfassung * | 1 | RECHERCHIERTE SACHGEBIETE (Int. Cl. ³) |
| | --- | | |
| A | MACHINE DESIGN, Band 51, Nr. 28, Dezember 1979, Seiten 143-149, Cleveland, US L. TESCHLER: "The promise of integrated optics" * Artikel * | 3-5 | |
| | --- | | |
| A | ELEKTRONIK, Band 31, Nr. 17, 27. August 1982, Seite 18, München, DE E. DEGENSCHARF: "Integration optischer und elektronischer Komponenten" * Artikel * | 3-5 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 10-02-1984 | POPINEAU G.J.P. |